(19) Europäisches Patentamt European Patent Office Office européen des brevets

(11) **EP 4 779 354 A1**

(12) **EUROPEAN PATENT APPLICATION**

(43) Date of publication:
**22.07.2026  Bulletin 2026/30**

(21) Application number: **25305062.9**

(22) Date of filing: **17.01.2025**

(51) International Patent Classification (IPC):
*G01S 7/41* (2006.01)   *G01S 13/00* (2006.01)
*G01S 13/04* (2006.01)   *G01S 13/48* (2006.01)
*G01S 13/46* (2006.01)   *G01S 13/931* (2020.01)
*G01S 13/933* (2020.01)

(52) Cooperative Patent Classification (CPC):
**G01S 7/412; G01S 13/003; G01S 13/04;**
**G01S 13/48;** B60N 2210/20; B60R 21/0153;
G01S 13/931; G01S 13/933; G01S 2013/462;
G01S 2013/9323; G01S 2013/9324;
G01S 2013/9328

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
 • **Mitsubishi Electric R&D Centre Europe B.V.**
   **1119 NS  Schiphol Rijk Amsterdam (NL)**
   Designated Contracting States:
   **FR**
 • **MITSUBISHI ELECTRIC CORPORATION**
   **Chiyoda-ku**
   **Tokyo 100-8310 (JP)**
   Designated Contracting States:
   **AL AT BE BG CH CY CZ DE DK EE ES FI GB GR HR HU IE IS IT LI LT LU LV MC ME MK MT NL NO PL PT RO RS SE SI SK SM TR**

(72) Inventors:
 • **NGUYEN, Viet Hoa**
   **35708 RENNES CEDEX 7 (FR)**
 • **CORLAY, Vincent**
   **35708 RENNES CEDEX 7 (FR)**
 • **GRESSET, Nicolas**
   **35708 RENNES CEDEX 7 (FR)**

(74) Representative: **Plasseraud IP**
   **104 Rue de Richelieu**
   **CS92104**
   **75080 Paris Cedex 02 (FR)**

(54)   **RAY-BASED DETECTION SYSTEM AND PROCESS**

(57)   A ray-based detection system for detecting a wave blocking content within an environment (E) in based on ray-tracing. The system suits for detecting presence of an object or a human in the environment, in particular for safety of security applications. Two alternative implementations are provided for inferring the presence of the object or human from sensed waves. The system also allows distinguishing between several postures of the detected human. The waves implemented by the ray-based detection system may be radio waves, acoustic waves or laser-emitted waves.

**FIG. 2**

EP 4 779 354 A1

**Description**

The invention relates to a ray-based detection system and a process using the same.

-- BACKGROUND OF THE INVENTION --

Many applications require remotely detecting an object or a human in an identified part of an environment, commonly called zone-of-interest. Such are safety applications, security applications, control in logistics, etc. Technologies already implemented in this purpose comprise radio signal processing, including of radar type, image processing, including using thermal infrared radiations, acoustic sensing, laser-based technologies, etc.

However, some of these existing systems do not suit confined or small-sized environments or require direct line-of-sight from a detector to the zone-of-interest. Some of these systems are also sensitive to interfering elements such as acoustic sources or heat sources, so that the detection information they produce is not reliable.

Starting from this situation, one object of the present invention consists in providing a new detection system that alleviates at least some of the drawbacks of the already-existing systems.

Another object of the invention consists in providing such detection system that is additionally capable of identifying a posture of the object or human when present in the zone-of-interest.

Still another object of the invention consists in providing such detection system that is low-cost and easy-to-install for monitoring the zone-of-interest.

-- SUMMARY OF THE INVENTION --

For meeting at least one of these objects or others, a first aspect of the present invention proposes a ray-based detection system for detecting a wave blocking content within an environment, the ray-based detection system comprising:

- at least one transmitter, configured for emitting waves into the environment;

- at least one receiver, configured for sensing the waves after these waves have propagated within the environment;

- a storage unit, configured for storing a partition of a zone-of-interest contained in the environment into a set of sub-portions; and

- a processing unit, configured for analyzing the sensed waves so as to determine whether each of at least two of the sub-portions has a respective wave blocking content.

Possibly, the transmitter and the receiver may be implemented as a common transceiver capable of operating as both the transmitter and the receiver.

Because it is based on waves, the invention detection system is not sensitive to interfering waves of a different kind and to interfering heat sources, so that it is compatible with many environment types. In addition, a frequency range of the waves that are implemented by the system can be selected apart from signals or significant noise possibly existing in the environment.

Thanks to partitioning the zone-of-interest into a plurality of sub-portions, and collecting information about several of the sub-portions containing wave blocking material or not, it is possible to provide information about the outline of the overall content made of wave blocking material. In particular, collecting information about the content of several sub-portions that are juxtaposed horizontally on the floor and also about sub-portions that are superposed vertically allows distinguishing between a person lying on the floor and a standing person.

Preferably, the processing unit may be configured for, for each of the at least two of the sub-portions, first selecting at least one of the emitted waves that corresponds to a respective ray passing through this sub-portion, and then analyzing at least one of the sensed waves that corresponds to the at least one selected emitted wave for determining whether the sub-portion has the wave blocking content.

In a usual way, rays are associated with waves according to their local direction of propagation, and following successive changes in the propagation direction that may be due to reflections, refractions, diffractions, diffusions, etc. Such connection between rays and waves applies whatever the type of the waves. The wave-based detection system of the invention is thus based on an analysis of propagation rays of the waves. This allows the analysis that is executed by the processing unit to be of ray-tracing type, which can be easy to implement compared to other analysis types. In the context of the invention, wave propagation includes straight-line propagation of the waves but also includes wave propagation which experiences one of several successive reflections, for example on peripheral limits of the environment but also on any element present within the environment. It also includes wave deflections, for example due to transitions between differing propagation media, and wave diffractions where waves bend around obstacles or spread out after passing through narrow openings. Thus, one of the sub-portions that is hidden to the transmitter may be reached by rays of some of the waves after these rays have been reflected between the transmitter and the hidden sub-portion. Similarly, the rays can be reflected between the sub-portion and the receiver. Put another way, direct line-of-sight from the transmitter and also to the receiver is not necessary for correct and reliable detection by the ray-based detection system of the invention.

Generally, in the ray-based detection system, the at least one transmitter and the at least one receiver may be adapted so that the waves are radio waves, or acoustic waves, or laser-emitted waves, or others. Radio waves may be preferred for many environments, but acoustic waves suit underwater environments where radio waves do not propagate well. Laser-emitted waves may be easy to implement. The storage unit and the processing unit may not depend on the wave type.

Generally also, the ray-based detection system of the invention may be configured for operating with a two-dimensional or three-dimensional environment. In case of a two-dimensional environment, the sub-portions are surface portions, for example squares, triangles, hexagons, etc, and they are volume portions for a three-dimensional environment, such as cubes, parallelepiped portions, etc.

In preferred embodiments, the processing unit may be further configured for determining whether the at least one sub-portion that is passed through by a ray has the wave blocking content by combining sensing results outputted by the at least one receiver for several rays corresponding to differing ray paths of the emitted waves through the sub-portions, the sensing result for each ray indicating whether this ray has been blocked for wave propagation or not between the transmitter and the receiver involved with the corresponding ray path. This multiple-ray analysis provides increased reliability to the detection result in case several rays reach one and same sub-portion. But it also allows solving some configurations of the sub-portions where ambiguity would exist otherwise between several possibilities for the wave blocking material to be contained in different ones of the sub-portions.

Advantageously, the processing unit may be further configured for determining whether each ray is propagating from the corresponding transmitter up to the corresponding receiver through several ones of the sub-portions by using at least one Boolean equation that is a function of respective states of the sub-portions, the state of each sub-portion indicating whether this sub-portion has the wave blocking content or not. Such implementation allows efficient and rapid analysis, compatible with real-time or almost real-time operation of the ray-based detection system.

Possibly for Boolean-based embodiments, the processing unit may be further configured for determining whether the at least one sub-portion has the wave blocking content by implementing a solver module with a truth table. The truth table to be used indicates whether each ray propagates from the corresponding transmitter up to the corresponding receiver or not, depending on each sub-portion having the wave blocking content or not, and thereafter checking for unicity of solution.

In alternative embodiments of the ray-based detection system, the processing unit may be configured for determining whether the at least one sub-portion has the wave blocking content by executing a matrix-based computation from a vector indicating whether some of the rays have been blocked or not for wave propagation between the respective corresponding transmitter and the respective corresponding receiver. Advantageously, the matrix-based computation may be an approximate matrix-based computation.

Generally for the invention, the transmitter may be adapted for implementing beam-forming, so that each emitted wave has a shape of a collimated beam matching an emission direction that is a start direction of the corresponding ray. Then, the receiver may be adapted for implementing beam-forming so as to select a reception direction that matches a terminal direction of the ray corresponding to the wave currently emitted by the transmitter, and detect whether the wave is received according to the selected reception direction. Thus, the reception direction is consistent with the emission direction of the transmitter so that both the transmitter and receiver correspond simultaneously to a same one of the ray paths.

A second aspect of the invention proposes a process for detecting a wave blocking content within an environment, this process comprising:

/1/ providing a ray-based detection system according to the first aspect;

/2/ recording an identification and coordinates of each of the sub-portions in the storage unit;

/3/ causing the least one transmitter to emit waves into the environment and causing the at least one receiver to sense the waves after these waves have propagated within the environment; and

/4/ using the processing unit, determining whether at least one of the sub-portions has a wave blocking content or not.

Generally, the process may be used with any environment, including indoor environments, outdoor environments, confined environments, open environments, large- or small-sized environments, aerial environments, underwater environments, etc. Such environment examples encompass the cockpit of a plane, the driver's cabin of a vehicle, including of a train, a warehouse, any room, etc without limitation.

In possible implementations, the process may be implemented for warning when an object or a human is or is not in the zone-of-interest. In particular, it may be implemented for revealing the object or human having a shape that corresponds to an identified sub-set of the sub-portions. Possibly, it may be implemented for warning when the human is in a posture or postures that correspond(s) to one or several identified sub-set(s) of the sub-portions. In useful implementations, the posture of concern for the human may be a lying posture, and detection by the ray-based detection system of the human in the lying posture may trigger an alert.

These and other features of the invention will be now described with reference to the appended figures, which relate to preferred but not-limiting embodiments of the invention.

## -- BRIEF DESCRIPTION OF THE DRAWINGS --

Figure 1 illustrates a ray-based detection system according to an embodiment of the invention.

Figure 2 illustrates a simplified three-dimensional implementation of the ray-based detection system of Figure 1.

Figure 3 is a diagram of steps executed when using a ray-based detection system according to possible embodiments the invention.

Figure 4a illustrates a basic two-dimensional implementation of a ray-based detection system according to another embodiment of the invention.

Figure 4b is a truth table used in the implementation of Figure 4a.

## -- DETAILED DESCRIPTION OF THE INVENTION --

The invention is described below with implemented waves being radio waves, for illustration purpose but without any limitation with respect to using other kinds of waves. Then, phrases such as ray-based detection system and wave blocking content as used in the above general description part respectively correspond to radiodetection system and radio-propagation blocking content.

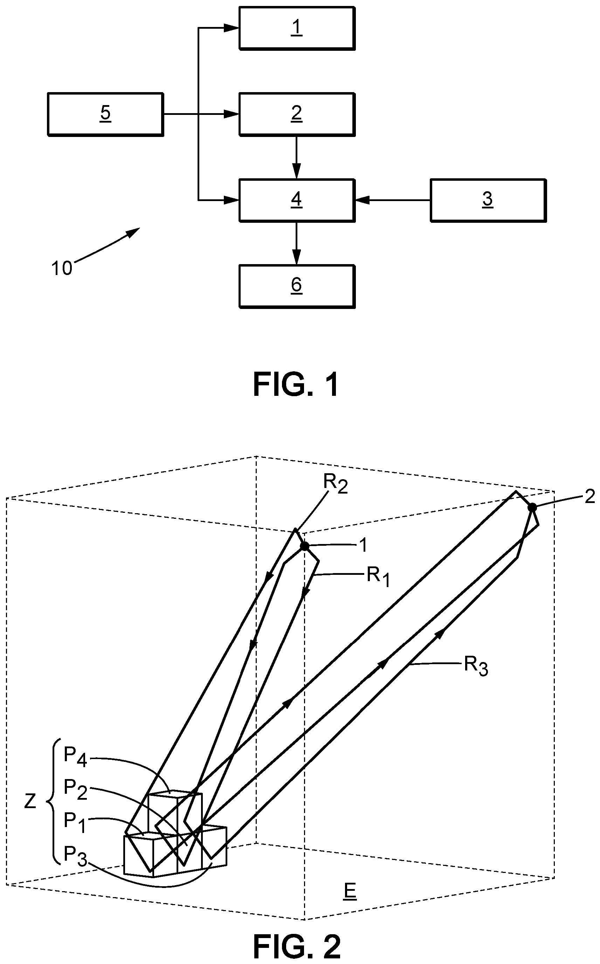

Referring to Figure 1, a radiodetection system 10 comprises one or more transmitter(s) 1, one or more receiver(s) 2, a storage unit 3 and a processing unit 4. The system 10 may further comprise a controller 5 for activating operations of the other components of the system, and an optional alert issuer 6. The transmitter 1 is configured for producing radio emission in a spectral range such as 1 GHz (gigahertz) to 100 GHz, and the receiver 2 is spectrally consistent with the transmitter 1 for sensing radio waves emitted by this latter. Preferably, the transmitter 1 and/or the receiver 2 may be each suitable for implementing beam-forming in emission and/or reception, respectively, so that radio waves sensed by the receiver can be assigned to one ray path of the radio waves from the transmitter 1 to the receiver 2.

For operation of the system 10, the transmitter 1 is installed for emitting the radio waves into an environment E where detection is to be performed. The receiver 2 is installed for sensing the emitted radio waves after they have propagated within the environment E, possibly including reflections of the radio waves on peripheral limits of the environment E, such as walls, or elements contained in this environment E. Operation of the transmitter 1 and receiver 2 makes it possible to identify a ray path within the environment E between emission and reception, corresponding to the propagation of the radio waves. Possibly, the system 10 may comprise several pairs each comprised of a transmitter and a receiver and dedicated to an identified ray path.

Figure 2 shows a simple implementation of the system 10 for illustration purpose, but the system can be operated with any complex configuration of the environment E. In the represented example, the environment E is a parallelepipedal room with walls, floor and ceiling which are all at least partially reflecting for the radio waves. The purpose of using the system 10 may be detecting presence of a person, for example close to one of the walls and determining whether this person is standing or lying on the floor. One will understand that any other posture of the person may be contemplated, for example a pilot sitting in front of the flying deck of a plane, the cockpit then forming the environment E. The transmitter 1 and the receiver 2 may be installed at respective locations in the environment E, for example near upper corners of the room. Figure 2 also shows several, e.g. three, ray paths that connect the transmitter 1 to the receiver 2, including reflections in this example. The rays corresponding to radio waves emitted by the transmitter 1 to propagate along these ray paths are respectively labelled $R_1$, $R_2$ and $R_3$.

A zone-of-interest Z is defined within the environment E, as a sub-part thereof where the person is expected to be if present. The zone-of-interest Z may encompass a whole volume that could be occupied by the person having expected postures. Then, the zone-of-interest Z is divided into a plurality of sub-portions such that identifying some of these sub-portions as being occupied whereas others are empty allows determining that the person is within the zone-of-interest Z with a posture determined by those of the sub-portions that are occupied. In the represented example, four sub-portions $P_1$, $P_2$, $P_3$ and $P_4$ constitute the zone-of-interest Z: sub-portions $P_1$, $P_2$ and $P_3$ are aligned horizontally next to one another, and sub-portion $P_4$ is located above sub-portion $P_2$. Sub-portions $P_1$-$P_2$ or $P_2$-$P_3$ being occupied but $P_4$ empty means that the person is lying on the floor, whereas sub-portions $P_2$ and $P_4$ being occupied but $P_1$ and $P_3$ empty means that the person is standing. Other combinations of occupied vs empty sub-portions appear as sensing faults.

The principle of operation of the system 10 which is now described is based on considering that a sub-portion which is occupied by part of the person to be detected is blocking propagation of the radio waves, so that rays are stopped at this sub-portion or deflected out of the ray path. In the context of this description, a sub-portion is considered as blocking propagation of the radio waves when its content is absorbing, reflecting or diffusing in an extent such that detection of the radio waves by the receiver 2 is altered compared to this sub-portion being empty and thus transparent to the radio waves. To this end, a frequency of the radio waves may be 2.45 GHz or more, as an example. Thus, after radio waves have been emitted by the transmitter 1 along an identified ray path in the environment E, the receiver 2 is capable of distinguishing between two states for this ray path: either the ray has reached the receiver 2 without being blocked at any location along its path, or the ray has been blocked at at least one of the sub-portions located on its path. If necessary, a reference sensing state may be recorded for each ray path in absence of the person during an initialization step, and the sensed state for the same ray path during a detection operation of the system 10 is compared to the reference sensing state. Reliability of sensing whether the ray path is blocked or not in the detection operation is improved in this way.

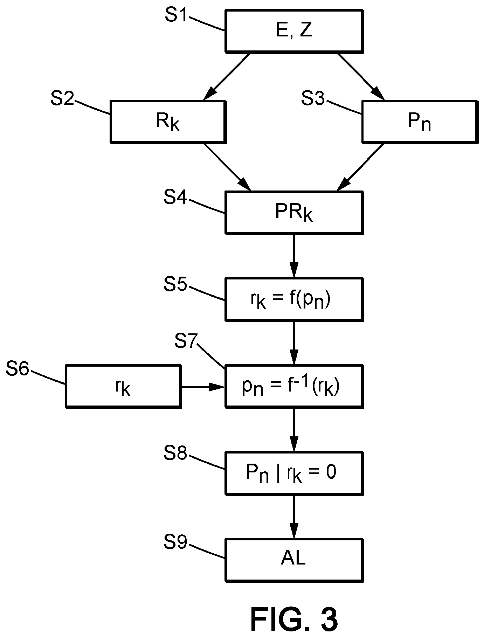

Figure 3 shows several steps of a detection process that uses the system 10. Steps S1 to S5 constitute a setup sequence of the system 10 for operation with desired detection conditions, and steps S6 to S9 constitute a detection operation. Steps S1 to S5 may not be repeated for each new detection operation as long as the detection conditions remain unchanged.

Step S1 consists in obtaining a numerical model of the environment E in absence of the person to detect, optionally including positions and extensions of any element that may be blocking for the propagation of the radio waves within the environment E. This numerical model also includes the location and limits of the zone-of-interest Z, and the respective coordinates and orientations of the transmitter 1 and the receiver 2 for each ray path. All these data are recorded in the storage unit 3.

Step S2 implements ray-tracing using the processing unit 4. It consists in calculating the respective paths of a number of rays, each corresponding to propagation of a radio wave within the environment E from the transmitter 1 up to the receiver 2 in absence of the person to detect, i.e. when the zone-of-interest Z is empty. Any software which is designed for ray-tracing can be used. Only the ray paths that have each at least one ray segment which crosses the zone-of-interest Z are useful and are recorded in the storage unit 3. They are denoted below by $R_k$ where k is a first integer index used for identifying these rays, k varying from 1 to the number K of calculated ray paths that each cross the zone-of-interest Z.

Step S3 consists in recording in the storage unit 3 a partition of the zone-of-interest Z into a plurality of sub-portions. Any two of the sub-portions do not overlap, but a merging of all the sub-portions matches the zone-of-interest Z. The sub-portions are denoted below by $P_n$ where n is a second integer index used for identifying the sub-portions, n varying from 1 to the number N of the sub-portions in the partition.

Step S4 consists in determining those among all sub-portions $P_n$ that are located on the path of a given ray $R_k$. This is carried out by combining the ray-tracing results obtained in step S2 with the partition recorded in step S3. $PR_k$ denotes the set of all sub-portions that are crossed by ray $R_k$ in absence of the person: $PR_k = \{P_{n1}, P_{n2},..., P_{n\_max\_k}\}$ where n1, n2,..., n_max_k are values of the index n.

Step S5 consists in determining a state $r_k$ of each ray $R_k$ as a function of each sub-portion $P_n$ being transparent or blocking for the propagation of the radio waves. Thus, the state $r_k$ of each ray $R_k$ has a binary value: either blocked between the transmitter 1 and the receiver 2 or propagating from the transmitter 1 up to the receiver 2. Step 5 can be carried out easily from step S4 and results in a NxK-dimensional function that provides the respective states of all the rays $R_k$ from respective binary states of all sub-portions $P_n$ indicating that each sub-portion is either transparent or blocking for propagation of the radio waves. Such function is denoted by f and may be presented as a table with $2^N$ rows corresponding respectively to all state combinations for the sub-portions $P_n$, and K columns respectively assigned to the rays $R_k$ and indicating for each of them whether it is blocked or passing between the transmitter 1 and the receiver 2. Such table is called truth table. It may be provided with N input columns, one input column per each sub-portion $P_n$ that indicates a considered state value $p_n$ thereof, and K output columns, one output column per each ray $R_k$, which indicates the state value $r_k$ that results for this ray $R_k$ from the state values $p_n$ within each line of the table.

Steps S1 to S5 may be implemented by the processing unit 4 using either Boolean equations or matrix-based computations. Such implementations are provided now as examples, but others may be used alternatively.

The state $p_n$ of any sub-portion $P_n$ equals 0 if this sub-portion is blocking for propagation of radio waves, and it equals 1 if it is not-blocking i.e. it is transparent to the radio waves.

Using Boolean equations, the state $r_k$ of any ray $R_k$ can be computed as:

$$r_k = p_{n1} \text{ AND } p_{n2} \text{ AND } \ldots \text{ AND } p_{n\_max\_k}$$

where AND is the Boolean multiplication operator, and n1, n2,..., n_max_k are again the index values all the sub-portions that are crossed by the path of ray $R_k$, as resulting from step S4. Thus, the state $r_k$ of ray $R_k$ equalling 1 means that this ray is propagating from the transmitter 1 up to the receiver 2, and state $r_k$ equalling 0 means that ray $R_k$ is blocked between the transmitter 1 and the receiver 2. With the above-introduced f-function: $r_k = f(\{p_n\})$.

For using matrix-based computations, the following may be defined:

the state values $r_k$ are used again with same meaning as before: 0 if ray $R_k$ is blocked somewhere between the transmitter 1 and the receiver 2, or 1 if ray $R_k$ travels until reaching the receiver 2;

the states of all sub-portions $P_n$ are gathered in a N-vector denoted P with the $n^{th}$-coordinate of this vector P being the state $p_n$ of sub-portion $P_n$ as defined above;

a KxN-matrix A with K rows and N columns, and the following coefficient $a_{kn}$ at $k^{th}$-row and $n^{th}$-column: $a_{kn} = 1$ if sub-portion $P_n$ is on the path of ray $R_k$, otherwise 0; and

a diagonal KxK-matrix B having its $k^{th}$-diagonal coefficient equalling the sum of coefficients $a_{kn}$ for n from 1 to N: $b_k = a_{k1}+a_{k2}+...+a_{kN}$, i.e. the sum of the coefficients of the $k^{th}$ row of matrix A over all columns, and all off-diagonal coefficients of matrix B equalling 0.

Then, the state $r_k$ of ray $R_k$ equals the integer part, also called floored value, of the ratio of the product of the $k^{th}$-row of matrix A with vector P, divided by coefficient $b_k$. This corresponds to the following equations (eq1) for all k-values, using standard notations:

$$r_k = \left\lfloor \frac{\sum_{n=1}^{N} a_{kn} \cdot p_n}{b_k} \right\rfloor \qquad \text{(eq1)}$$

Referring again to Figure 3, step S6 consists in emitting radio waves corresponding to each ray $R_k$ and sensing whether this ray is travelling or not from the transmitter 1 up to the receiver 2. This sensing step thus provides measured state values $r_k$ each equalling 0 or 1. Each so-measured state value $r_k$ forms a respective $k^{th}$-coordinate of a K-vector R which constitutes the sensing result.

Step S7 consists in determining the state values $p_n$, each equalling 0 or 1, of all sub-portions $P_n$ that produce sensing result R. This corresponds to computing the reverse $f^{-1}$ of the function f introduced above, but it may happen in some configurations that several combinations of state values $p_n$ for all sub-portions $P_n$ produce the same vector R.

Step S8 corresponds to outputting those of the sub-portions $P_n$ whose respective state values $p_n$ equal 0, i.e. the sub-portions which are blocking for propagation of the radio waves. At least one sub-portion having its state value equalling 0 indicates that a person is present in the zone-of-interest Z, and the relative positions of the blocking sub-portions constitute an indication of the posture of the detected person.

In case the detection has a security or safety function, an alert AL can be triggered in step S9 using the alert issuer 6, based on a person being detected or not, and when detected possibly based additionally on the posture of the detected person as inferred from those of the sub-portions that have appeared as blocking. Referring again to Figure 2 and considering that a normal situation is a person standing in the zone-of-interest Z, a sensing result that consists in all sub-portions $P_1$ to $P_4$ being transparent triggers an alert in step S9, and a sensing result that indicates any combination of blocking sub-portions which does not contain sub-portion $P_4$ also triggers an alert because it reveals that the person is lying on the floor or abnormal sensing result.

Steps S7 and S8 may be executed again using either Boolean equations or matrix-based computations. The Boolean-based execution better suits small N-values, i.e. small numbers of sub-portions, whereas the matrix-based computations can be used for any N-value.

The Boolean-based execution of steps S7 and S8 consists in scanning the output columns of the truth table, for searching all rows that correspond to the sensing result vector R. This can be achieved by implementing a solver module that scans the rows, for example from the top of the truth table, and identifies the first row being encountered with the content of the output columns matching the sensing result vector R. The content of the input columns for this row is a solution of the problem $P = f^{-1}(R)$. Unicity of this solution can then be checked by scanning again the truth table but with the search criterium of the sensing result vector R combined with exclusion of the solution already found. Possibly, this can be carried out in two ways depending on whether one is interested with the states of all the sub-portions or only one of them. In the first case, the whole vector P of the first-found solution is to be excluded for scanning again the truth table, and this is repeated each time with exclusion of all already-found solution vectors P until no further solution is found. Another implementation for checking unicity of the solution may be resuming the scan of the truth table from the next row after that of the solution already found, and repeating it until reaching the last row of the truth table. All possible state combinations for the sub-portions that are compatible with the sensed ray states are thus found, identified and can be outputted in step S8. In the second case where the state of only one targeted sub-portion in searched, only the value contained in the first-found solution vector P for the targeted sub-portion is to be excluded.

For the matrix-based execution of steps S7 and S8, equations (eq1) can be written in the following way:

$$\sum_{n=1}^{N} a_{kn} \cdot p_n = b_k \cdot r_k + t_k, \quad \text{where } t_k = \sum_{n=1}^{N} a_{kn} \cdot p_n \ \text{MOD}(b_k) \qquad (eq2)$$

where $\text{MOD}(b_k)$ denotes the reduction through known modulo-operation with respect to integer value of $b_k$.

Equations (eq2) for all k-values can be rewritten as follows:

$$B \cdot R + T = A \cdot P \qquad (eq3)$$

where T is a K-vector with modulo-reduced value $t_k$ as $k^{th}$-coordinate.

Then, the following approximate values $t_k^*$ may be used for the modulo-reduced values $t_k$:

$$t_k^* = E_{P \in X}\left\{\sum_{n=1}^{N} a_{kn} \cdot p_n \ \text{MOD}(b_k)\right\} \qquad (eq4)$$

where E is an average of the content of the curly brackets computed over all possible or expected values for vector P, forming a set denoted by X in equation (eq4). For example, referring to the implementation example of Figure 2, the set of possible or expected values for vector P may be comprised of all sub-portions $P_1$-$P_4$ being empty, sub-portions $P_1$ and $P_2$ only being occupied corresponding to the person lying on the floor closer to left side in the figure, sub-portions $P_2$ and $P_3$ only being occupied also corresponding to the person lying on the floor but closer to right side, and $P_2$ and $P_4$ only being occupied corresponding to the person standing vertically.

Then equation (eq3) can be inverted in an approximate manner as follows:

$$P = \text{round}[A^{-1}(B \cdot R + T^*)] \qquad (eq5)$$

where $T^*$ is a K-vector with approximate value $t_k^*$ as $k^{th}$-coordinate for all k-values, $A^{-1}$ is the reverse of matrix A, and round [.] is the rounding operation resulting in 0 or 1 as the value closest to the bracket content.

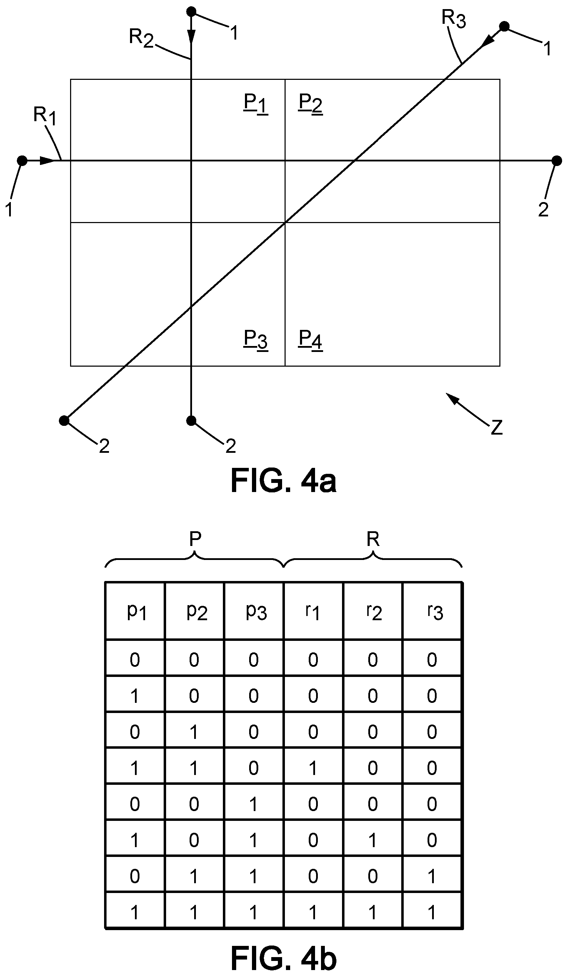

A simple two-dimensional example is now provided with reference to Figure 4a. The zone-of-interest Z is comprised of a 2x2 array of rectangle sub-portions $P_1, P_2, P_3$ and $P_4$. Three transmitters 1 and three receivers 2 are used in the system 10, so as to implement the three rays $R_1, R_2$ and $R_3$ as represented in the figure.

Using Boolean equations, the respective states of these rays are: $r_1 = p_1$ AND $p_2$, $r_2 = p_1$ AND $p_3$, $r_3 = p_2$ AND $p_3$. Figure 4b displays the resulting truth table, limited to sub-portions $P_1$-$P_3$ since sub-portion $P_4$ is not crossed by any ray. If the sensing result vector is R=(0, 1, 0), then the unique solution is P=(1, 0, 1) from the truth table, meaning that only sub-portion $P_2$ is occupied with radio-propagation blocking content. In case the sensing result vector is R=(0, 0, 0), then four solutions are possible for vector P, which are (0, 0, 0), (1, 0, 0), (0, 1, 0) and (0, 0, 1).

For the matrix-based computations, the $a_{kn}$-coefficients are determined as equalling 1 if sub-portion $P_n$ is on the path of ray $R_k$, otherwise 0. This leads to the following A-matrix and B-matrix:

$$A = \begin{pmatrix} 1 & 1 & 0 \\ 1 & 0 & 1 \\ 0 & 1 & 1 \end{pmatrix} \qquad B = \begin{pmatrix} 2 & 0 & 0 \\ 0 & 2 & 0 \\ 0 & 0 & 2 \end{pmatrix},$$

i.e. $b_k = 2$ for all k-values

One can easily check that applying equations (eq1) with all possible value combinations for the sub-portion states $p_1$, $p_2$ and $p_3$ leads to the truth table of Figure 4b. Indeed, for k=1, the following sum:

$$\sum_{n=1}^{3} a_{1n} \cdot p_n = (1 \quad 1 \quad 0) \cdot \begin{pmatrix} p_1 \\ p_2 \\ p_2 \end{pmatrix}$$

applied successively to:

$$P = \begin{pmatrix} 1 \\ 1 \\ 1 \end{pmatrix}, \begin{pmatrix} 1 \\ 1 \\ 0 \end{pmatrix}, \begin{pmatrix} 0 \\ 0 \\ 1 \end{pmatrix}, \begin{pmatrix} 0 \\ 0 \\ 0 \end{pmatrix}, \begin{pmatrix} 0 \\ 1 \\ 1 \end{pmatrix}, \begin{pmatrix} 0 \\ 1 \\ 0 \end{pmatrix}, \begin{pmatrix} 1 \\ 0 \\ 1 \end{pmatrix}, \begin{pmatrix} 1 \\ 0 \\ 0 \end{pmatrix}$$

yields to the results in the same order: 2, 2, 0, 0, 1, 1, 1, 1. With $b_1$=2, one obtains for the floored ratios of equation (eq1) again in the order $\lfloor\frac{2}{2}\rfloor$, $\lfloor\frac{2}{2}\rfloor$, $\lfloor\frac{0}{2}\rfloor$, $\lfloor\frac{0}{2}\rfloor$, $\lfloor\frac{1}{2}\rfloor$, $\lfloor\frac{1}{2}\rfloor$, $\lfloor\frac{1}{2}\rfloor$, $\lfloor\frac{1}{2}\rfloor$, respectively equaling 1, 1, 0, 0, 0, 0, 0, 0 which matches the content of the truth matrix for the $r_1$-column in the rows defined by the state values $p_1$, $p_2$ and $p_3$ of the sub-portions.

The reverse of matrix A is:

$$A^{-1} = \frac{1}{2} \cdot \begin{pmatrix} 1 & 1 & -1 \\ 1 & -1 & 1 \\ -1 & 1 & 1 \end{pmatrix}$$

Considering that the set X corresponds to all eight possible combinations of the state values $p_n$, the approximate values of equations (eq4) are $t_1^* = t_2^* = t_3^* = 0.5$.

For example, if the sensing result vector R is (0, 1, 0), then:

$$B \cdot R + T^* = \begin{pmatrix} 0.5 \\ 2.5 \\ 0.5 \end{pmatrix} \text{ and } A^{-1}(B \cdot R + T^*) = \begin{pmatrix} 1.25 \\ -0.75 \\ 1.25 \end{pmatrix}$$

so that the rounding operation of equation (eq5) actually provides the respective sub-portion state values $p_1$=1, $p_2$=0 and $p_3$=1 as the single solution. For a case where the sensing result vector R can be produced by several solution vectors P, these can be obtained in general by varying the set X of the expected values for vector P that is used for calculating the approximate vector T* involved in equation (eq5).

Although the above detailed description deals with detecting a person, it is reminded that the invention can be applied similarly for detecting any object within a zone-of-interest inside any environment.

**Claims**

1. A ray-based detection system (10) for detecting a wave blocking content within an environment (E), the ray-based detection system comprising:

   - at least one transmitter (1), configured for emitting waves into the environment (E);
   - at least one receiver (2), configured for sensing the waves after said waves have propagated within the environment (E);
   - a storage unit (3), configured for storing a partition of a zone-of-interest (Z) contained in the environment (E) into a set of sub-portions ($P_1$, $P_2$, $P_3$, $P_4$); and
   - a processing unit (4), configured for analyzing the sensed waves so as to determine whether each of at least two of the sub-portions has a respective wave blocking content.

2. The ray-based detection system (10) of claim 1, wherein the processing unit (4) is configured for, for each of the at least two of the sub-portions ($P_1$, $P_2$, $P_3$, $P_4$), first selecting at least one of the emitted waves that corresponds to a respective ray ($R_1$, $R_2$, $R_3$) passing through said sub-portion, and then analyzing at least one of the sensed waves that corresponds to the at least one selected emitted wave for determining whether said sub-portion has the wave blocking content.

3. The ray-based detection system (10) of claim 2, wherein the processing unit (4) is further configured for determining whether the at least one sub-portion that is passed through by a ray has the wave blocking content by combining sensing results outputted by the at least one receiver (2) for several rays ($R_1$, $R_2$, $R_3$) corresponding to differing ray paths of the emitted waves through the sub-portions ($P_1$, $P_2$, $P_3$, $P_4$), the sensing result for each ray indicating whether said ray has been blocked for wave propagation or not between the transmitter (1) and the receiver (2) involved with the corresponding ray path.

4. The ray-based detection system (10) of claim 3, wherein the processing unit (4) is further configured for determining whether each ray ($R_1$, $R_2$, $R_3$) is propagating from the corresponding transmitter (1) up to the corresponding receiver (2) through several ones of the sub-portions ($P_1$, $P_2$, $P_3$, $P_4$) by using at least one Boolean equation that is a function of respective states of said sub-portions, the state of each sub-portion indicating whether said sub-portion has the wave blocking content or not.

5. The ray-based detection system (10) of claim 4, wherein the processing unit (4) is further configured for determining whether the at least one sub-portion ($P_1$, $P_2$, $P_3$, $P_4$) has the wave blocking content by implementing a solver module with a truth table, said truth table indicating whether each ray ($R_1$, $R_2$, $R_3$) propagates from the corresponding transmitter (1) up to the corresponding receiver (2) or not, depending on each sub-portion having the wave blocking content or not, and thereafter checking for unicity of solution.

6. The ray-based detection system (10) of claim 3, wherein the processing unit (4) is configured for determining whether the at least one sub-portion ($P_1$, $P_2$, $P_3$, $P_4$) has the wave blocking content by executing a matrix-based computation from a vector indicating whether some of the rays ($R_1$, $R_2$, $R_3$) have been blocked or not for wave propagation between the respective corresponding transmitter (1) and the respective corresponding receiver (2).

7. The ray-based detection system (10) of claim 6, wherein the matrix-based computation is an approximate matrix-based computation.

8. The ray-based detection system (10) of one of claims 1 to 7, wherein the transmitter (1) is adapted for implementing beam-forming, so that each emitted wave has a shape of a collimated beam matching an emission direction that is a start direction of the corresponding ray ($R_1$, $R_2$, $R_3$).

9. The ray-based detection system (10) of claim 8, wherein the receiver (2) is adapted for implementing beam-forming so as to select a reception direction that matches a terminal direction of the ray ($R_1$, $R_2$, $R_3$) corresponding to the wave currently emitted by the transmitter (1), and detect whether the wave is received according to the selected reception direction.

10. A process for detecting a wave blocking content within an environment (E), the process comprising:

    /1/ providing a ray-based detection system (10) according to one of the preceding claims;
    /2/ recording an identification and coordinates of each of the sub-portions ($P_1$, $P_2$, $P_3$, $P_4$) in the storage unit (3);
    /3/ causing the least one transmitter (1) to emit waves into the environment (E) and causing the at least one receiver (2) to sense the waves after said waves have propagated within the environment; and
    /4/ using the processing unit (4), determining whether at least one of the sub-portions ($P_1$, $P_2$, $P_3$, $P_4$) has a wave blocking content or not.

11. The process of claim 10, implemented for warning when an object or a human is or is not in the zone-of-interest (Z).

12. The process of claim 11, implemented for revealing the object or human having a shape that corresponds to an identified sub-set of the sub-portions ($P_1$, $P_2$, $P_3$, $P_4$).

13. The process of claim 11, implemented for warning when the human is in a posture or postures that correspond(s) to one or several identified sub-set(s) of the sub-portions ($P_1$, $P_2$, $P_3$, $P_4$).

**14.** The process of claim 13, wherein the posture of the human is a lying posture, and detection by the ray-based detection system (10) of the human in the lying posture triggers an alert.

**15.** The process of one of claims 10 to 14, wherein the environment (E) is a cockpit of a plane, or a driver's cabin of a vehicle, in particular a driver's cabin of a train.

# FIG. 1

# FIG. 2

S1 — E, Z

S2 — $R_k$

S3 — $P_n$

S4 — $PR_k$

S5 — $r_k = f(p_n)$

S6 — $r_k$

S7 — $p_n = f^{-1}(r_k)$

S8 — $P_n \mid r_k = 0$

S9 — AL

# FIG. 3

...

FIG. 4a

| P | | | R | | |
|---|---|---|---|---|---|
| $p_1$ | $p_2$ | $p_3$ | $r_1$ | $r_2$ | $r_3$ |
| 0 | 0 | 0 | 0 | 0 | 0 |
| 1 | 0 | 0 | 0 | 0 | 0 |
| 0 | 1 | 0 | 0 | 0 | 0 |
| 1 | 1 | 0 | 1 | 0 | 0 |
| 0 | 0 | 1 | 0 | 0 | 0 |
| 1 | 0 | 1 | 0 | 1 | 0 |
| 0 | 1 | 1 | 0 | 0 | 1 |
| 1 | 1 | 1 | 1 | 1 | 1 |

FIG. 4b

## EUROPEAN SEARCH REPORT

**Application Number**

EP 25 30 5062

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/172946 A1 (GOLOMBEK HAREL [IL] ET AL) 30 May 2024 (2024-05-30)<br>* paragraphs [0015] - [0022] *<br>* paragraphs [0098] - [0123] *<br>* paragraphs [0170] - [0171] *<br>* paragraphs [0234] - [0236] *<br>* paragraphs [0246] - [0247] *<br>----- | 1-15 | INV.<br>G01S7/41<br>G01S13/00<br>G01S13/04<br>G01S13/48<br><br>ADD.<br>G01S13/46 |
| X | EP 1 562 794 B1 (SIEMENS AG [DE]) 3 May 2006 (2006-05-03)<br>* paragraphs [0009] - [0041] *<br>* paragraphs [0045] - [0049] *<br>----- | 1,10 | G01S13/931<br>G01S13/933 |

**TECHNICAL FIELDS SEARCHED (IPC)**

G01S
B60R

The present search report has been drawn up for all claims

| Place of search | Date of completion of the search | Examiner |
|---|---|---|
| Munich | 17 June 2025 | Hirsch, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 30 5062

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2025

| Patent document cited in search report | Publication date | Patent family member(s) | Publication date |
|---|---|---|---|
| US 2024172946 A1 | 30-05-2024 | NONE | |
| EP 1562794 B1 | 03-05-2006 | DE 10254200 A1 | 17-06-2004 |
| | | EP 1562794 A1 | 17-08-2005 |
| | | JP 4221374 B2 | 12-02-2009 |
| | | JP 2006506627 A | 23-02-2006 |
| | | US 2006152347 A1 | 13-07-2006 |
| | | WO 2004045915 A1 | 03-06-2004 |

EPO FORM P0459

For more details about this annex : see Official Journal of the European Patent Office, No. 12/82